# EUROPEAN PATENT APPLICATION

(11) **EP 4 300 648 A1**
(43) Date of publication of application: **03.01.2024**
(21) Application number: 22929211.5
(22) Date of filing: 07.05.2022
(51) Int. Cl.: H01M 10/05

(54) **SECONDARY BATTERY, BATTERY MODULE, BATTERY PACK AND ELECTRIC APPARATUS**

(71) Applicant: Contemporary Amperex Technology Co., Limited, Ningde City, Fujian 352100 (CN)
(72) Inventor: LI, Xiaolong, Ningde, Fujian 352100 (CN); ZHANG, Xinxin, Ningde, Fujian 352100 (CN); LIN, Wenguang, Ningde, Fujian 352100 (CN); CHEN, Xiaoxia, Ningde, Fujian 352100 (CN); LIU, Ben, Ningde, Fujian 352100 (CN); YAO, Shikang, Ningde, Fujian 352100 (CN); LAN, Jiadian, Ningde, Fujian 352100 (CN)
(74) Representative: Gong, Jinping
(86) International application number: PCT/CN2022/091479
(87) International publication number: WO 2023/216029

(57) **Abstract**

This application relates to a secondary battery, a battery module, a battery pack, and an electric apparatus. The secondary battery includes: a negative electrode plate including a negative electrode current collector and a negative electrode film layer disposed on the negative electrode current collector, the negative electrode film layer containing a carbon material; a positive electrode plate including a positive electrode current collector and a positive electrode active material layer disposed on the positive electrode current collector, the positive electrode active material layer containing a sodium-ion active material; and an electrolyte disposed between the negative electrode plate and the positive electrode plate, the electrolyte containing sodium salt and lithium salt.

## Description

### TECHNICAL FIELD

This application relates to the field of batteries, and specifically, to a secondary battery, a battery module, a battery pack, and an electric apparatus.

### BACKGROUND

Secondary batteries have been widely used in various consumer electronic products and electric vehicles due to their prominent advantages of light weight, no pollution, and no memory effect.

With continuous development of the new energy industry, customers have imposed higher requirements for use of secondary batteries. The rising price of lithium resources has further increased the costs of current traction batteries, greatly limiting their applications. Sodium exhibits physical and chemical properties that are very similar to lithium, and sodium is much more abundant and cheaper than lithium on the earth. Therefore, developing sodium-ion batteries with sodium-ion active materials is an effective way of resolving the problem of high costs of current traction batteries.

However, in practical production, it has been found that current sodium-ion batteries have problems such as poor cycling performance.

### SUMMARY

In view of the foregoing problem, this application provides a secondary battery, a battery module, a battery pack, and an electric apparatus that can improve cycling performance.

According to a first aspect, this application provides a secondary battery, including:
a negative electrode plate, including a negative electrode current collector and a negative electrode film layer disposed on the negative electrode current collector, the negative electrode film layer containing a carbon material;
a positive electrode plate, including a positive electrode current collector and a positive electrode active material layer disposed on the positive electrode current collector, the positive electrode active material layer containing a sodium-ion active material; and
an electrolyte, disposed between the negative electrode plate and the positive electrode plate, the electrolyte containing sodium salt and lithium salt.

In the technical solution of the foregoing embodiment of this application, the positive electrode active material layer of the positive electrode plate includes the sodium-ion active material, the negative electrode film layer of the negative electrode plate contains the carbon material, and the electrolyte includes both the sodium salt and lithium salt. Both lithium ions in lithium salts and sodium ions in sodium salts of the electrolyte are monovalent cations carrying a single positive charge, lithium ions have a smaller radius and higher positive charge density, and the carbon material in the negative electrode film layer has free electrons, making it easier to adsorb lithium ions with higher positive charge density. Therefore, during charging of the secondary battery, lithium ions are distributed at the dendrite tips ahead of sodium ions, effectively reducing the deposition of sodium ions at the sodium dendrite tips and forming an effective charge shielding layer. This suppresses the growth of sodium dendrites and significantly improves the cycling performance of the foregoing secondary battery.

In some embodiments, the negative electrode film layer has a thickness of 0.3 µm to 3 µm, and the negative electrode film layer has a surface density of 5 g/m² to 50 g/m². The thickness and surface density of the negative electrode film layer being in the specified ranges can further promote the adsorption of lithium ions on the negative electrode film layer, effectively suppressing the growth of sodium dendrites.

In some embodiments, the carbon material in the negative electrode film layer includes at least one of carbon nanotubes, graphite, graphene, and carbon fiber.

In some embodiments, based on a mass of the electrolyte, a mass percentage of the lithium salt is 0.1% to 10%. The thickness and surface density of the negative electrode film layer being in the specified ranges can further promote the adsorption of lithium ions on the negative electrode film layer, effectively suppressing the growth of sodium dendrites.

In some embodiments, the negative electrode film layer has a surface density of x g/m², where x = 5 g/m² to 50 g/m²; based on a mass of the electrolyte, a mass percentage of the lithium salt is y%; and
x and y satisfy the following condition: 0.84 ≤ y - 0.01x ≤ 5.84.

In addition, the carbon material in the negative electrode film layer has free electrons, making it relatively easy to adsorb lithium ions with higher positive charge density. This may lead to a decrease in the effective concentration of lithium ions in the electrolyte. Therefore, as the surface density of the negative electrode film layer containing such carbon material increases, the optimal concentration of the lithium salt also increases. Therefore, the lithium salt is in the foregoing optimal concentration range corresponding to the coating surface density of the negative electrode film layer.

In some embodiments, the lithium salt includes at least one of lithium hexafluorophosphate, lithium tetrafluoroborate, lithium perchlorate, lithium hexafluoroarsenate, lithium trifluoroacetate, lithium tetraphenylborate, lithium trifluoromethanesulfonate, lithium bisoxalatoborate, lithium difluorooxalate borate, lithium bis(fluorosulfonyl)imide, and lithium bis(trifluoromethanesulfonyl)imide.

In some embodiments, a mass percentage of the sodium salt in the electrolyte is 3% to 25%;
and/or the electrolyte further includes a solvent, and a mass percentage of the solvent in the electrolyte is 70% to 95%.

In some embodiments, the sodium salt includes at least one of sodium perchlorate, sodium tetrafluoroborate, sodium hexafluorophosphate, sodium hexafluoroarsenate, sodium trifluoroacetate, sodium tetraphenylborate, sodium trifluoromethanesulfonate, sodium bis(fluorosulfonyl)imide, and sodium bis(trifluoromethanesulfonyl)imide;
and/or the solvent includes at least one of ether solvent, ester solvent, alkane solvent, and sulfonyl solvent.

In some embodiments, the solvent includes at least one of ethylene glycol dimethyl ether, diethylene glycol dimethyl ether, triethylene glycol dimethyl ether, tetraethylene glycol dimethyl ether, 1,3-dioxolane, ethylene carbonate, propylene carbonate, butylene carbonate, vinylene carbonate, fluoroethylene carbonate, ethyl methyl carbonate, dimethyl carbonate, diethyl carbonate, dipropyl carbonate, methyl propyl carbonate, ethyl propyl carbonate, γ-butyrolactone, 1,3-propane sultone, methyl propionate, methyl butyrate, ethyl acetate, ethyl propionate, propyl propionate, ethyl butyrate, and dimethyl sulfoxide.

According to a second aspect, this application provides a battery module, including the secondary battery in the foregoing embodiment.

According to a third aspect, this application provides a battery pack, including the battery module in the foregoing embodiment.

According to a fourth aspect, this application provides an electric apparatus, including at least one of the secondary battery, the battery module, and the battery pack in the foregoing embodiments, the secondary battery being configured to supply power.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. In addition, in all the accompanying drawings, like parts are indicated by same accompanying symbols. In the accompanying drawings:
FIG. 1 is a schematic diagram of a secondary battery according to an embodiment of this application.
FIG. 2 is an exploded view of the secondary battery according to the embodiment of this application in FIG. 1.
FIG. 3 is a schematic diagram of a battery module according to an embodiment of this application.
FIG. 4 is a schematic diagram of a battery pack according to an embodiment of this application.
FIG. 5 is an exploded view of the battery pack according to the embodiment of this application in FIG. 4.
FIG. 6 is a schematic diagram of an electric apparatus using a secondary battery as a power source according to an embodiment of this application.
FIG. 7 is a diagram of cycling performance test results of secondary batteries obtained from examples 1 and 2 and comparative examples 1 and 2.
FIG. 8 is a diagram of cycling performance test results of secondary batteries obtained from examples 3 and 4 and comparative examples 1 and 2.
FIG. 9 is a diagram of cycling performance test results of secondary batteries obtained from examples 5 and 6 and comparative examples 1 and 2.
FIG. 10 is a diagram of cycling performance test results of secondary batteries obtained from examples 7 and 8 and comparative examples 1 and 2.
FIG. 11 is a diagram of cycling performance test results of secondary batteries obtained from examples 9 and 10 and comparative examples 1 and 2.
FIG. 12 is a diagram of cycling performance test results of secondary batteries obtained from examples 11 and 12 and comparative examples 1 and 2.
FIG. 13 is a diagram of cycling performance test results of secondary batteries obtained from examples 13 to 15 and comparative examples 1 and 2.
FIG. 14 is a diagram of cycling performance test results of secondary batteries obtained from examples 16 and 17 and comparative examples 1 and 2.

Reference numerals in the accompanying drawings are described as follows:
1. battery pack; 2. upper box body; 3. lower box body; 4. battery module; 5. secondary battery; 51. housing; 52. electrode assembly; and 53. cover plate.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "have", and any other variations thereof in the specification, claims and brief description of drawings of this application are intended to cover non-exclusive inclusions.

In the description of the embodiments of this application, the terms "first", "second", and the like are merely intended to distinguish between different objects, and shall not be understood as any indication or implication of relative importance or any implicit indication of the number, sequence or primary-secondary relationship of the technical features indicated. In the description of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various positions in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

The following describes a secondary battery, a battery module, a battery pack, and an electric apparatus in this application with appropriate reference to the accompanying drawings.

An embodiment of this application provides a secondary battery. The secondary battery includes a positive electrode plate, a negative electrode plate, and an electrolyte. In a charge and discharge process of the battery, active ions on the positive electrode plate are intercalated and deintercalated between the positive electrode plate and the negative electrode plate. The electrolyte conducts ions between the positive electrode plate and the negative electrode plate.

The negative electrode plate includes a negative electrode current collector and a negative electrode film layer disposed on the negative electrode current collector, the negative electrode film layer containing a carbon material. The positive electrode plate includes a positive electrode current collector and a positive electrode active material layer disposed on the positive electrode current collector, the positive electrode active material layer containing a sodium-ion active material. The electrolyte is disposed between the negative electrode plate and the positive electrode plate, the electrolyte containing sodium salt and lithium salt.

Generally, active sodium ions on the positive electrode plate are intercalated and deintercalated between the positive electrode plate and the negative electrode plate. In this way, during the charging process of the secondary battery, the negative electrode undergoes an electrochemical reaction where sodium ions are reduced to sodium metal by gaining electrons. In the initial stage of the reaction, sodium metal deposits unevenly on the surface of the negative electrode current collector, forming dendrites. The dendrite tips have a higher negative charge density due to the tip effect, thus affecting the cycling performance of the secondary battery.

In the technical solution of the foregoing embodiment of this application, the positive electrode active material layer of the positive electrode plate includes the sodium-ion active material, the negative electrode film layer of the negative electrode plate contains the carbon material, and the electrolyte includes both the sodium salt and lithium salt. Both lithium ions in lithium salts and sodium ions in sodium salts of the electrolyte are monovalent cations carrying a single positive charge, lithium ions have a smaller radius and higher positive charge density, and the carbon material in the negative electrode film layer has free electrons, making it easier to adsorb lithium ions with higher positive charge density. Therefore, during charging of the secondary battery, lithium ions are distributed at the dendrite tips ahead of sodium ions, effectively reducing the deposition of sodium ions at the sodium dendrite tips and forming an effective charge shielding layer. This suppresses the growth of sodium dendrites and significantly improves the cycling performance of the foregoing secondary battery.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil or a composite current collector. For example, for the metal foil, a copper foil may be used. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the carbon material in the negative electrode film layer may be a well-known carbon material for batteries in the art. For example, in some embodiments, the carbon material in the negative electrode film layer includes at least one of the following: carbon nanotubes, graphite, graphene, carbon fiber, meso-carbon microbeads, glassy carbon, soft carbon, and hard carbon. The graphite includes at least one of artificial graphite and natural graphite. Specifically, graphite may be expanded graphite, highly oriented graphite, three-dimensional graphite, and the like. However, this application is not limited to these materials. One of the carbon materials in the foregoing negative electrode film layer may be used alone, or two or more of them may be used in combination.

Further, preferably, the carbon material in the negative electrode film layer is at least one of graphite, graphene, and carbon fiber.

In some specific examples, the negative electrode film layer containing the foregoing carbon material is a carbon material coating.

In some embodiments, the negative electrode film layer containing the foregoing carbon material has a thickness of 0.3 µm to 3 µm, and the negative electrode film layer containing the foregoing carbon material has a surface density of 5 g/m² to 50 g/m². The thickness and surface density of the negative electrode film layer being in the specified ranges can further promote the adsorption of lithium ions on the negative electrode film layer, effectively suppressing the growth of sodium dendrites.

In some embodiments, the negative electrode film layer further optionally includes a binder. The binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofiber.

In some embodiments, the negative electrode film layer may further optionally include other promoters such as a thickener (for example, sodium carboxymethyl cellulose (CMC-Na)).

In some embodiments, the negative electrode plate may be prepared in the following manner: the constituents used for preparing the negative electrode plate, for example, the carbon material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

### [Positive electrode plate]

The positive electrode plate includes a positive electrode current collector and a positive electrode active material layer provided on at least one surface of the positive electrode current collector, and the positive electrode active material layer includes a sodium-ion active material, the sodium-ion active material being used as a positive electrode active material.

In an example, the positive electrode current collector has two opposite surfaces in a thickness direction thereof, and the positive electrode active material layer is disposed on either or both of the two opposite surfaces of the positive electrode current collector.

In some embodiments, the positive electrode current collector may be a metal foil or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the positive electrode active material may be a well-known positive electrode active material for batteries in the art. In an example, the sodium-ion active material may include at least one of the following materials: sodium transition metal oxide, polyanionic compound, and Prussian blue compound. However, this application is not limited to such materials, but may alternatively use other conventional well-known materials that can be used as a positive electrode active material for the sodium-ion battery.

In an optional technical solution in this application, in the sodium transition metal oxide, the transition metal may be at least one of Mn, Fe, Ni, Co, Cr, Cu, Ti, Zn, V, Zr, and Ce. The sodium transition metal oxide may be, for example, NaₓMO₂, where M represents one or more of Ti, V, Mn, Co, Ni, Fe, Cr, and Cu, and 0 < x ≤ 1.

In an optional technical solution in this application, the polyanionic compound may be a type of compound containing sodium ions, transition metal ions, and tetrahedral (YO₄)ⁿ⁻anionic units. The transition metal may be at least one of Mn, Fe, Ni, Co, Cr, Cu, Ti, Zn, V, Zr, and Ce; Y may be at least one of P, S, and Si; and n represents the valence state of (YO₄)ⁿ⁻.

The polyanionic compound may further be a type of compound containing sodium ions, transition metal ions, tetrahedral (YO₄)ⁿ⁻ anionic units, and halogen anions. The transition metal may be at least one of Mn, Fe, Ni, Co, Cr, Cu, Ti, Zn, V, Zr, and Ce; Y may be at least one of P, S, and Si; n represents the valence state of (YO₄)ⁿ⁻; and the halogen may be at least one of F, Cl, and Br.

The polyanionic compound may further be a type of compound containing sodium ions, tetrahedral (YO₄)ⁿ⁻ anionic units, polyhedral units (ZO_{y})^{m+}, and optional halogen anions. Y may be at least one of P, S, and Si, where n represents the valence state of (YO₄)ⁿ⁻; Z represents the transition metal, which may be at least one of Mn, Fe, Ni, Co, Cr, Cu, Ti, Zn, V, Zr, and Ce, and m represents the valence state of (ZO_{y})^{m+}; and the halogen may be at least one of F, Cl, and Br.

The polyanionic compound may be, for example, at least one of NaFePO₄, Na₃V₂(PO4)₃ (sodium vanadium phosphate, NVP), Na₄Fe₃(PO₄)₂(P₂O₇), NaM'PO₄F (M' represents one or more of V, Fe, Mn, and Ni), and at least one of Na₃(VO_{y})₂(PO₄)₂F_{3-2y} (0 ≤ y ≤ 1).

The Prussian blue compound may be a type of compound containing sodium ions, transition metal ions, and cyanide ions (CN⁻). The transition metal may be at least one of Mn, Fe, Ni, Co, Cr, Cu, Ti, Zn, V, Zr, and Ce. The Prussian blue compound may be, for example, NaₐMe_{b}Me'_{c}(CN)₆, where Me and Me' each independently represent at least one of Ni, Cu, Fe, Mn, Co, and Zn, and 0 < a ≤ 2, 0 < b < 1, and 0 < c < 1.

In some embodiments, the positive electrode active material layer may further optionally include a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorine-containing acrylic resin.

In some embodiments, the positive electrode active material layer may further optionally include a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following manner: the foregoing constituents used for preparing the positive electrode plate, for example, the sodium-ion active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing, to obtain the positive electrode plate.

### [Electrolyte]

The electrolyte conducts ions between the positive electrode plate and the negative electrode plate. The electrolyte is not specifically limited to any particular type in this application and may be selected based on needs. For example, the electrolyte may be in a liquid state, a gel state, or an all-solid state.

In some embodiments, based on a mass of the electrolyte, a mass percentage of the lithium salt is 0.1% to 10%. The lithium salt in the electrolyte being controlled in a specified range can allow the formation of an effective charge shielding layer by lithium ions on the surface of the negative electrode, thereby inhibiting the growth of sodium dendrites. In addition, it can help to prevent excessively high concentration of the lithium ions, which leads to excessively high density of the lithium ions on the surface of the negative electrode current collector and contributes to an increased over potential for the sodium metal deposition.

It can be understood that based on a mass of the electrolyte, a mass percentage of the lithium salt may be 0.1%, 0.2%, 0.5%, 0.8%, 1%, 2%, 3%, 4%, 5%, 6%, 7%, 8%, 9%, and 10%. Further, based on the mass of the electrolyte, the mass percentage of the lithium salt may be 0.5% to 5%, 0.5% to 2%, and 0.5% to 1%.

In addition, the carbon material in the negative electrode film layer has free electrons, making it relatively easy to adsorb lithium ions with higher positive charge density. This may lead to a decrease in the effective concentration of lithium ions in the electrolyte. Therefore, with the increase in the surface density of the negative electrode film layer containing such carbon material, the optimal concentration of the lithium salt also increases. Therefore, the lithium salt is in the following optimal concentration range corresponding to the coating surface density of the negative electrode film layer.

In some embodiments, the surface density of the negative electrode film layer containing the carbon material is x g/m², where x = 5 g/m² to 50 g/m²; based on the electrolyte, the mass percentage of the lithium salt is y%; and
x and y satisfy the following condition: 0.84 ≤ y - 0.01x ≤ 5.84.

Furthermore, the negative electrode film layer containing the carbon material has a thickness of 0.3 µm to 3 µm.

In some embodiments, the lithium salt includes at least one of the following: lithium hexafluorophosphate (LiPF₆), lithium tetrafluoroborate (LiBF₄), lithium perchlorate (LiClO4), lithium hexafluoroarsenate (LiAsF₆), lithium trifluoroacetate (CF₃COOLi), lithium tetraphenylborate (LiB(C₆H₅)₄), lithium trifluoromethanesulfonate (LiSO₃CF₃),lithium bisoxalatoborate (LiBOB), lithium difluorooxalate borate (LiDFOB), lithium bis(fluorosulfonyl)imide (Li[(FSO₂)₂N]), and lithium bis(trifluoromethanesulfonyl)imide (Li[(CF₃SO₂)₂N]).

In some embodiments, a mass percentage of the sodium salt in the electrolyte is 3% to 25%.

In some embodiments, the sodium salt includes at least one of the following: sodium perchlorate (NaClO₄), sodium tetrafluoroborate (NaBF₄), sodium hexafluorophosphate (NaPF₆), sodium hexafluoroarsenate (NaAsF₆), sodium trifluoroacetate (CF₃COONa), sodium tetraphenylborate (NaB(C₆H₅)₄), sodium trifluoromethanesulfonate (NaSO₃CF₃), sodium bis(fluorosulfonyl)imide (Na[(FSO₂)₂N]), and sodium bis(trifluoromethanesulfonyl)imide (Na[(CF₃SO₂)₂N]).

In some embodiments, the electrolyte is liquid. In addition to electrolyte salts such as the sodium salt and lithium salt, the electrolyte further includes a solvent.

In some embodiments, a mass percentage of the solvent in the electrolyte is 70% to 95%.

In some examples, in the electrolyte, the mass percentage of the solvent is 70% to 95%; the mass percentage of the sodium salt is 3% to 25%; and the mass percentage of the lithium salt is 0.1% to 10%.

In some embodiments, the solvent includes at least one of the following: ether solvent, ester solvent, alkane solvent, and sulfonyl solvent.

In some examples, the solvent includes at least one of ethylene glycol dimethyl ether, diethylene glycol dimethyl ether, triethylene glycol dimethyl ether, tetraethylene glycol dimethyl ether, 1,3-dioxolane, ethylene carbonate, propylene carbonate, butylene carbonate, vinylene carbonate, fluoroethylene carbonate, ethyl methyl carbonate, dimethyl carbonate, diethyl carbonate, dipropyl carbonate, methyl propyl carbonate, ethyl propyl carbonate, γ-butyrolactone, 1,3-propane sultone, methyl propionate, methyl butyrate, ethyl acetate, ethyl propionate, propyl propionate, ethyl butyrate, and dimethyl sulfoxide.

In some embodiments, the electrolyte further optionally includes an additive. For example, the additive may include a negative electrode film-forming additive, a positive electrode film-forming additive, or may include an additive that can improve some performance of a battery, for example, an additive for improving over-charge performance of a battery, an additive for improving high-temperature performance or low-temperature performance of a battery, and the like.

### [Separator]

In some embodiments, the secondary battery further includes a separator. The separator is disposed between the positive electrode plate and the negative electrode plate to mainly prevent a short circuit between positive and negative electrodes and to allow the ions to pass through.

The separator is not limited to any particular type in this application and may be any well-known porous separator with good chemical stability and mechanical stability.

In some embodiments, a material of the separator may be selected from at least one of glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft package, for example, a soft pouch. A material of the soft package may be plastic. As the plastic, polypropylene, polybutylene terephthalate, and polybutylene succinate may be listed.

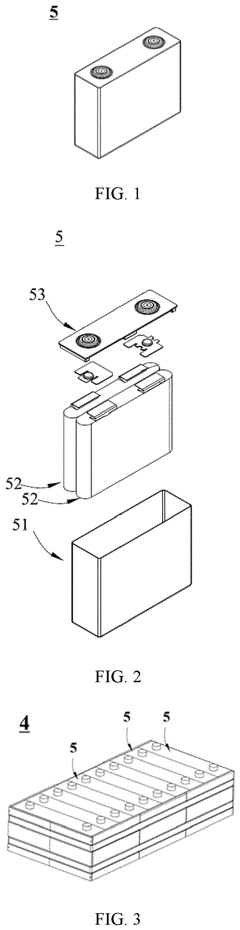

This application does not impose any special limitations on the shape of the secondary battery, and the secondary battery may be cylindrical, rectangular, or of any other shapes. For example, FIG. 1 shows a secondary battery 5 of a rectangular structure as an example.

In some embodiments, referring to FIG. 2, the outer package may include a housing 51 and a cover plate 53. The housing 51 may include a base plate and a side plate connected onto the base plate, where the base plate and the side plate enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. Electrolyte infiltrates into the electrode assembly 52. There may be one or more electrode assemblies 52 in the secondary battery 5, and persons skilled in the art may make choices according to actual requirements.

In some embodiments, the secondary battery may be assembled into a battery module, and the battery module may include one or more secondary batteries. The specific quantity may be chosen by persons skilled in the art according to use and capacity of the battery module.

FIG. 3 shows a battery module 4 as an example. With reference to FIG. 3, in the battery module 4, a plurality of secondary batteries 5 may be sequentially arranged in a length direction of the battery module 4. Certainly, the batteries may alternatively be arranged in any other manners. Further, the plurality of secondary batteries 5 may be fastened through fasteners.

Optionally, the battery module 4 may further include a housing with accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

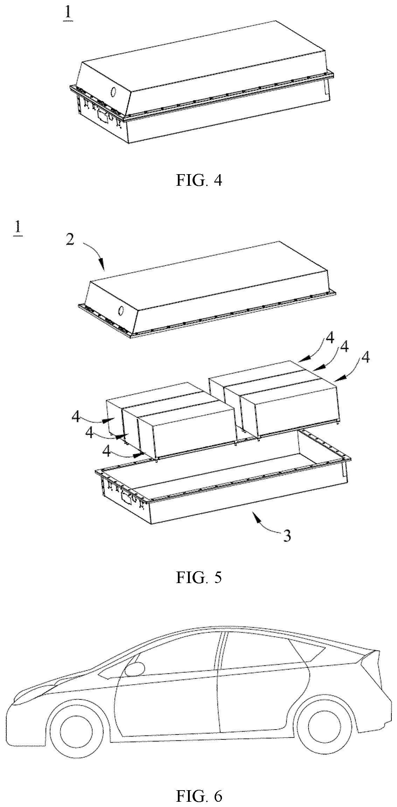

FIGs. 4 and 5 show a battery pack 1 as an example. Referring to FIGs. 4 and 5, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery module 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, the battery module, or the battery pack may be selected for the electric apparatus based on requirements for using the electric apparatus.

FIG. 6 shows an electric apparatus as an example. The electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

In another example, the apparatus may be a mobile phone, a tablet computer, a notebook computer, or the like. Such apparatus is generally required to be light and thin and may use a secondary battery as its power source.

Specific examples are as follows: The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### Example 1

### (1) Preparation of electrolyte

Dried ethylene glycol dimethyl ether (DME), sodium hexafluorophosphate (NaPF₆), and lithium hexafluorophosphate (LiPF₆) were weighed at a mass ratio of 85:15:2, resulting in a total of 10 g of samples. Then, the weighed samples were placed into a 20 mL glass vial with a black cap for dissolution. After full dissolution, the glass vial was left standing for 10 hours for further use. All the foregoing operations were performed inside a glovebox, with the water and oxygen content in the glovebox controlled below 1 ppm.

### (2) Preparation of stacked battery

A carbon nanotube aqueous solution (containing 0.05wt% CMC-Na) with a concentration of 1wt% was dispersed onto the negative electrode current collector using a scraper, followed by drying, cold pressing, and cutting to obtain a negative electrode plate with a carbon nanotube primer layer.

A positive electrode active material sodium vanadium phosphate (NVP), a conductive agent carbon black Super P, and a binder polyvinylidene fluoride (PVDF) were mixed at a mass ratio of 90:4:6 and dispersed uniformly in N-methylpyrrolidone (NMP) to obtain a positive electrode slurry. Then the positive electrode slurry was uniformly applied onto a positive electrode current collector, followed by drying, cold pressing, and cutting to obtain a positive electrode plate.

The resulting positive and negative electrode plates as well as the separator were trimmed to a proper size and then stacked in order, with the separator sandwiched between the positive and negative electrode plates to insulate them. Then, an aluminum-plastic film with a proper size was used for packaging the positive and negative electrode plates and the separator, with an electrolyte injection opening uncovered.

### (3) Electrolyte injection and packaging

The resulting stacked battery was placed in a drying oven under vacuum at 85°C for 12 hours, and then the dried battery was taken out. Once the battery temperature was cooled to room temperature, 0.5 g of the electrolyte prepared in step (1) was injected into the battery. After the injection, the electrolyte injection opening was heat-sealed. Subsequently, the packaged battery cell was loaded on an upper clamp and appropriate pressure was applied to both ends of the clamp, to complete the assembly of the stacked battery.

### (4) Formation and testing of the stacked battery

Subsequently, formation treatment was performed on the assembled stacked battery, with specific formation steps as follows: At 25±3°C, the battery was charged at a constant current of 0.1C (2.4 mA) to 3.5 V and then discharged at a constant current of 0.1C to 3.2 V. Afterward, cycling performance testing was conducted. The cycling performance testing included the following specific steps: The battery was charged at a constant current of 1C (24 mA) to 3.5 V and then discharged at a constant current of 1C to 3.2 V, and next, the charge and discharge cycle operation was repeated at the constant current of 1C, to obtain the capacity retention rate after 500 cycles.

### Examples 2 to 12

Examples 2 to 12 were the same as example 1 in other steps except the component proportions in the electrolytes.

### Examples 13 and 14

Examples 13 and 14 were the same as example 1 in other steps except the component proportions in the electrolytes, primer thicknesses, and primer surface densities.

### Example 15

Examples 13 and 14 were the same as example 1 in other steps except the primer thicknesses and primer surface densities.

### Examples 16 to 18

Examples 16 to 18 were the same as example 1 in other steps except the types of the primer carbon materials.

### Comparative examples 1 and 2

Comparative examples 1 and 2 were the same as example 1 in other steps except the component proportions in the electrolytes.

The electrolyte components (all in mass ratio), the primer carbon materials, the primer thicknesses, the primer surface densities, the positive electrode active materials, and the capacity retention rates after 500 cycles of the prepared batteries that are used in the examples and the comparative examples were shown in Table 1 below.

**Table 1**

| Group | Electrolyte composition (mass ratio) | Primer thicknes s | Primer surfac e densit y | Positive electrode active material | Primer carbon material | Capacit y retentio n rate after 500 cycles |
|---|---|---|---|---|---|---|
| Example 1 | DME:NaPF₆:LiPF₆ = 83:15:2 | 1 µm | 16 g/m² | Sodium vanadium phosphat e | Carbon nanotube | 91.0% |
| Example 2 | DME:NaPF₆:LiAsF₆ = 83:15:2 | 1 µm | 16 g/m² | Sodium vanadium phosphat e | Carbon nanotube | 91.5% |
| Example 3 | DME:NaPF₆:LiBF₄ = 83:15:2 | 1 µm | 16 g/m² | Sodium vanadium phosphat e | Carbon nanotube | 91.7% |
| Example 4 | DME:NaPF₆:LiDFOB = 83:15:2 | 1 µm | 16 g/m² | Sodium vanadium phosphat e | Carbon nanotube | 92.3% |
| Example 5 | DEGDME:NaPF₆:LiPF₆ = 83:15:2 | 1 µm | 16 g/m² | Sodium vanadium phosphat e | Carbon nanotube | 92.0% |
| Example 6 | DEGDME:NaPF₆:LiAsF₆ = 83:15:2 | 1 µm | 16 g/m² | Sodium vanadium phosphat e | Carbon nanotube | 91.8% |
| Example 7 | DEGDME:NaPF₆: LiBF₄ = 83:15:2 | 1 µm | 16 g/m² | Sodium vanadium phosphat e | Carbon nanotube | 91.6% |
| Example 8 | DEGDME:NaPF₆:LiDFO B = 83:15:2 | 1 µm | 16 g/m² | Sodium vanadium phosphat e | Carbon nanotube | 92.1% |
| Example 9 | DME:NaPF₆:LiPF₆ = 84:15:1 | 1 µm | 16 g/m² | Sodium vanadium phosphat e | Carbon nanotube | 88.9% |
| Example 10 | DME:NaPF₆:LiPF₆ = 84.5:15:0.5 | 1 µm | 16 g/m² | Sodium vanadium phosphat e | Carbon nanotube | 87.3% |
| Example 11 | DME:NaPF₆:LiPF₆ = 79:15:6 | 1 µm | 16 g/m² | Sodium vanadium phosphat e | Carbon nanotube | 87.1% |
| Example 12 | DME:NaPF₆:LiPF₆ = 78:15:7 | 1 µm | 16 g/m² | Sodium vanadium phosphat e | Carbon nanotube | 85.4% |
| Example 13 | DME:NaPF₆:LiPF₆ = 87:3:10 | 1 µm | 16 g/m² | Sodium vanadium phosphat e | Carbon nanotube | 85.5% |
| Example 14 | DME:NaPF₆:LiPF₆ = 74.9:25:0.1 | 3 µm | 50 g/m² | Sodium vanadium phosphat e | Carbon nanotube | 86.8% |
| Example 15 | DME:NaPF₆:LiPF₆ = 83:15:2 | 0.3 µm | 5 g/m² | Sodium vanadium phosphat e | Carbon nanotube | 88.6% |
| Example 16 | DME:NaPF₆:LiPF₆ = 83:15:2 | 1 µm | 16 g/m² | Sodium vanadium phosphat e | Graphite | 91.8% |
| Example 17 | DME:NaPF₆:LiPF₆ = 83:15:2 | 1 µm | 16 g/m² | Sodium vanadium phosphat e | Graphen e | 91.9% |
| Example 18 | DME:NaPF₆:LiPF₆ = 83:15:2 | 1 µm | 16 g/m² | Sodium vanadium phosphat e | Carbon fiber | 92.5% |
| Comparativ e example 1 | DME:NaPF₆= 85:15 | 1 µm | 16 g/m² | Sodium vanadium phosphat e | Carbon nanotube | 84.1% |
| Comparativ e example 2 | DEGDME:NaPF₆ = 85:15 | 1 µm | 16 g/m² | Sodium vanadium phosphat e | Carbon nanotube | 82.2% |

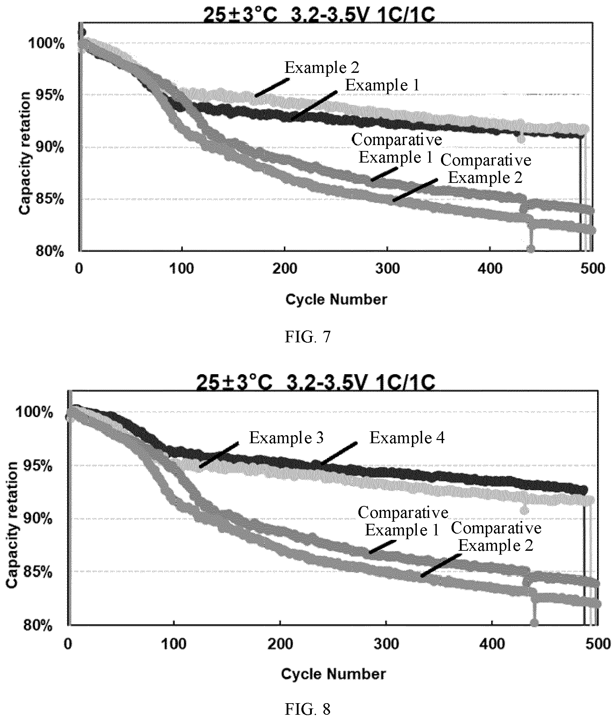

As shown in FIG. 7 and Table 1, capacity retention rates after 500 cycles in comparative examples 1 and 2 are only 84% and 82%. As compared with comparative examples 1 and 2, capacity retention rates in examples 1 and 2 reach about 91%. This indicates that the battery cycling performances in examples 1 and 2 are greatly improved after 2wt% LiPF₆ and 2wt% LiAsF₆ are added.

As shown in FIG. 8 and Table 1, as compared with comparative examples 1 and 2, capacity retention rates in examples 3 and 4 reach about 92%. This indicates that the battery cycling performances in examples 3 and 4 are greatly improved after 2wt% LiBF₄ and 2wt% LiDFOB are added.

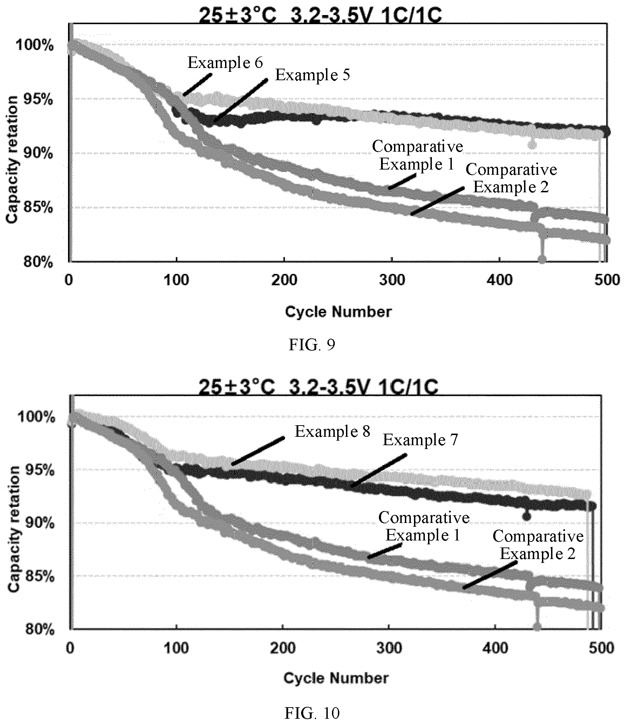

As shown in FIG. 9 and Table 1, examples 5 and 6 differ from examples 1 and 2 in that the solvent in the electrolyte in examples 1 and 2 is replaced, and specifically, the ethylene glycol dimethyl ether (DME) is replaced by diethylene glycol dimethyl ether (DEGDME), where the two solvents belong to the same category and have similar chemical properties. Similarly, as compared with comparative examples 1 and 2, the capacity retention rates in examples 5 and 6 reach about 91%. This indicates that such electrolyte formulation can also effectively improve battery cycling performance.

As shown in FIG. 10 and Table 1, examples 7 and 8 differ from examples 3 and 4 in that the solvent in the electrolyte in examples 3 and 4 is replaced, and specifically, the ethylene glycol dimethyl ether (DME) is replaced by diethylene glycol dimethyl ether (DEGDME), where the two solvents belong to the same category and have similar chemical properties. Similarly, as compared with comparative examples 1 and 2, the capacity retention rates in examples 7 and 8 reach about 91%. This indicates that such electrolyte formulation can also effectively improve battery cycling performance.

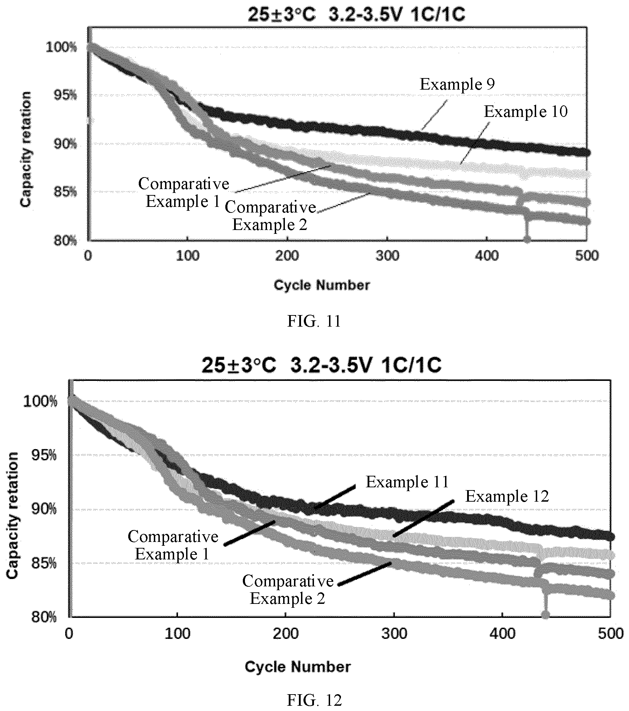

As shown in FIG. 11 and Table 1, examples 9 and 10 show a minimum boundary value and a value outside the boundary, respectively, of the mass percentage range of the lithium salt in the electrolyte, obtained by calculating the primer surface density according to the formula 0.84 ≤ y - 0.01x ≤ 5.84. It can be seen that as compared with comparative examples 1 and 2, the capacity retention rate after 500 cycles in example 9 is 88.9%, showing better battery cycling performance. The mass percentage of the lithium salt in the electrolyte in example 10 is lower than the minimum boundary value of the foregoing mass percentage range, that is, being the value outside the boundary of the mass percentage range. It can be seen that the capacity retention rate in example 10 is lower than that in example 9.

As shown in FIG. 12 and Table 1, examples 11 and 12 show a maximum boundary value and a value outside the boundary, respectively, of the mass percentage range of the lithium salt in the electrolyte, obtained by calculating the primer surface density according to the formula 0.84 ≤ y - 0.01x ≤ 5.84. It can be seen that as compared with comparative examples 1 and 2, the capacity retention rate after 500 cycles in example 11 is 87.1%, showing better battery cycling performance. The mass percentage of the lithium salt in the electrolyte in example 12 is higher than the maximum boundary value of the foregoing mass percentage range, that is, being the value outside the boundary of the mass percentage range. It can be seen that as compared with example 11, the capacity retention rate in example 12 is only 85.4%, showing insignificant optimization effect.

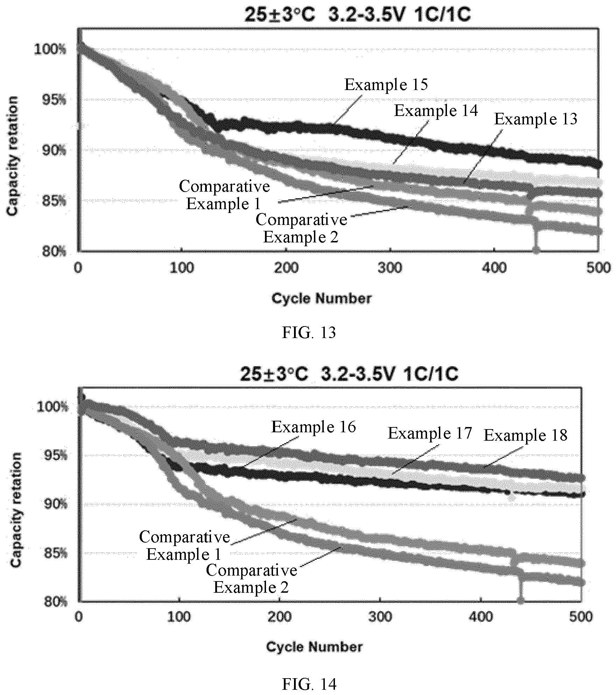

As shown in FIG. 13 and Table 1, among examples 13 to 15, example 15 shows a value in the mass percentage range, of the lithium salt in the electrolyte, obtained by calculating the primer surface density according to the formula 0.84 ≤ y - 0.01x ≤ 5.84. The mass percentages of the lithium salts in examples 13 and 14 are out of the range obtained through calculation. The capacity retention rate in example 15 is superior to those in examples 13 and 14.

It can be seen that the main difference between examples 9 to 13 in Table 1 lies in the percentage of the lithium salt, and preferably, the mass percentage of the lithium salt in the electrolyte is 0.5% to 1%.

As shown in FIG. 14 and Table 1, among example 1 and examples 16 to 18, the capacity retention rates in examples 16 to 18 are superior to that in example 1, and the capacity retention rate in example 18 is superior to that in example 17, and more superior to that in example 16. In other words, the carbon fiber, graphene, or graphite is a preferred option for the carbon material.

In conclusion, it should be noted that the above embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this application. They should all be covered in the scope of the claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A secondary battery, **characterized by** comprising:
a negative electrode plate, comprising a negative electrode current collector and a negative electrode film layer disposed on the negative electrode current collector, the negative electrode film layer containing a carbon material;
a positive electrode plate, comprising a positive electrode current collector and a positive electrode active material layer disposed on the positive electrode current collector, the positive electrode active material layer containing a sodium-ion active material; and
an electrolyte, disposed between the negative electrode plate and the positive electrode plate, the electrolyte containing sodium salt and lithium salt.

2. The secondary battery according to claim 1, **characterized in that** the negative electrode film layer has a thickness of 0.3 µm to 3 µm, and the negative electrode film layer has a surface density of 5 g/m² to 50 g/m².

3. The secondary battery according to claim 1 or 2, **characterized in that** the carbon material in the negative electrode film layer comprises at least one of carbon nanotubes, graphite, graphene, and carbon fiber.

4. The secondary battery according to any one of claims 1 to 3, **characterized in that** based on a mass of the electrolyte, a mass percentage of the lithium salt is 0.1% to 10%.

5. The secondary battery according to any one of claims 1 to 4, **characterized in that** the negative electrode film layer has a surface density of x g/m², wherein x = 5 g/m² to 50 g/m²; based on a mass of the electrolyte, a mass percentage of the lithium salt is y%; and
x and y satisfy the following condition: 0.84 ≤ y - 0.01x ≤ 5.84.

6. The secondary battery according to any one of claims 1 to 5, **characterized in that** the lithium salt comprises at least one of lithium hexafluorophosphate, lithium tetrafluoroborate, lithium perchlorate, lithium hexafluoroarsenate, lithium trifluoroacetate, lithium tetraphenylborate, lithium trifluoromethanesulfonate, lithium bisoxalatoborate, lithium difluorooxalate borate, lithium bis(fluorosulfonyl)imide, and lithium bis(trifluoromethanesulfonyl)imide.

7. The secondary battery according to any one of claims 1 to 6, **characterized in that** a mass percentage of the sodium salt in the electrolyte is 3% to 25%;
and/or the electrolyte further comprises a solvent, and a mass percentage of the solvent in the electrolyte is 70% to 95%.

8. The secondary battery according to claim 7, **characterized in that** the sodium salt comprises at least one of sodium perchlorate, sodium tetrafluoroborate, sodium hexafluorophosphate, sodium hexafluoroarsenate, sodium trifluoroacetate, sodium tetraphenylborate, sodium trifluoromethanesulfonate, sodium bis(fluorosulfonyl)imide, and sodium bis(trifluoromethanesulfonyl)imide;
and/or the solvent comprises at least one of ether solvent, ester solvent, alkane solvent, and sulfonyl solvent.

9. The secondary battery according to claim 8, **characterized in that** the solvent comprises at least one of ethylene glycol dimethyl ether, diethylene glycol dimethyl ether, triethylene glycol dimethyl ether, tetraethylene glycol dimethyl ether, 1,3-dioxolane, ethylene carbonate, propylene carbonate, butylene carbonate, vinylene carbonate, fluoroethylene carbonate, ethyl methyl carbonate, dimethyl carbonate, diethyl carbonate, dipropyl carbonate, methyl propyl carbonate, ethyl propyl carbonate, γ-butyrolactone, 1,3-propane sultone, methyl propionate, methyl butyrate, ethyl acetate, ethyl propionate, propyl propionate, ethyl butyrate, and dimethyl sulfoxide.

10. A battery module, **characterized by** comprising the secondary battery according to any one of claims 1 to 9.

11. A battery pack, **characterized by** comprising the battery module according to claim 10.

12. An electric apparatus, **characterized in that** the electric apparatus comprises at least one of the secondary battery according to any one of claims 1 to 9, the battery module according to claim 10, and the battery pack according to claim 11, the secondary battery being configured to supply power.
